Europäisches Patentamt

European Patent Office

Office européen des brevets

(11) Publication number: **0 198 655 B1**

(12) **EUROPEAN PATENT SPECIFICATION**

(45) Date of publication of patent specification: **22.07.92**

(51) Int. Cl.5: **G11B 7/12**, G11B 7/08, G11B 7/135

(21) Application number: **86302591.2**

(22) Date of filing: **08.04.86**

(54) **Optical heads.**

(30) Priority: **09.04.85 JP 75059/85**

(43) Date of publication of application:
**22.10.86 Bulletin 86/43**

(45) Publication of the grant of the patent:
**22.07.92 Bulletin 92/30**

(84) Designated Contracting States:
**DE FR GB IT NL**

(56) References cited:
**EP-A- 0 047 029**
**EP-A- 0 238 224**
**WO-A-87/04265**
**GB-A- 2 059 057**
**US-A- 4 541 688**

**PATENT ABSTRACTS OF JAPAN, vol. 9 no. 24 (P-331)[1747], 31st January 1985; & JP-A-59 167 863**

**PATENT ABSTRACTS OF JAPAN, vol. 10, no. 348 (P-519)[2404], 22nd November 1986; & JP-A-61 148 641**

(73) Proprietor: **SONY CORPORATION**
**7-35 Kitashinagawa 6-chome Shinagawa-ku Tokyo 141(JP)**

(72) Inventor: **Nakamura, Akira c/o Sony Corporation**
**Patents Division 7-35 Kitashinagawa Shinagawa-ku Tokyo 141(JP)**
Inventor: **Oinoue, Hiroshi c/o Sony Corporation**
**Patents Division 7-35 Kitashinagawa Shinagawa-ku Tokyo 141(JP)**
Inventor: **Ishida, Tomoyuki c/o Sony Corporation**
**Patents Division 6-7-35 Kitashinagawa Shinagawa-ku Tokyo 141(JP)**
Inventor: **Shintani, Kenji c/o Sony Corporation**
**Patents Division 7-35 Kitashinagawa Shinagawa-ku Tokyo 141(JP)**

(74) Representative: **Cotter, Ivan John et al**
**D. YOUNG & CO. 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to optical heads, for example for use in optical recording/reproducing apparatus.

An optical head radiates light beams onto an optical recording medium while being focused thereon, and detects light beams reflected therefrom. For this reason, when such an optical head is used, the beams must be split in different directions when they propagate forwardly and backwardly, and a focusing error must be detected. An astigmatic method is known as a method for detecting such a focusing error.

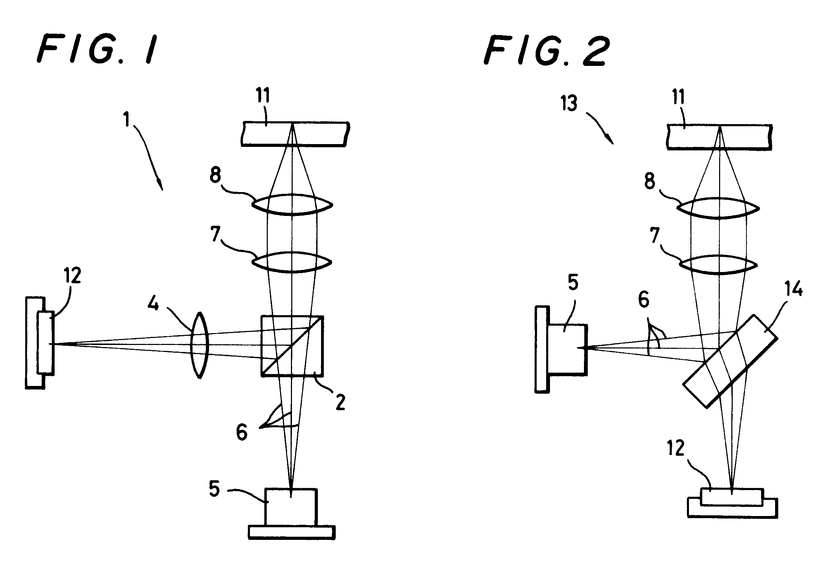

Figure 1 of the accompanying drawings shows a first previously proposed optical head 1 that comprises a cubic prism 2 formed by combining rectangular prisms and acting as a beam splitter, and a cylindrical lens 4 acting as an optical element for producing astigmatism for detecting focusing error.

Light beams 6 emitted from a light source 5 pass through the cubic prism 2, a collimator lens 7, and an objective lens 8, and are incident on an optical recording medium 11. The beams 6 reflected from the optical recording medium 11 then pass through the objective lens 8 and the collimator lens 7, and are reflected by the prism 2 to be incident on a photodetector 12 through the cylindrical lens 4.

Figure 2 of the accompanying drawings shows a second previously proposed optical head 13 which is disclosed in Japanese Patent Publication No. 59-167063. The optical head 13 resembles to some extent the optical head 1 shown in Figure 1. However, a plate-like half mirror 14 is used in place of the cubic prism 2 and the cylindrical lens 4. The half mirror 14 is obtained by forming a translucent film on one surface of a transparent parallel-surface plate. The half mirror 14 is arranged to be inclined with respect to converged light beams 6, as shown in Figure 2, so that the beams 6 passing through the half mirror 14 cause astigmatism. In other words, the half mirror 14 carries out both a beam splitting function and a function of producing astigmatism for detecting a focusing error.

In the first previously proposed optical head 1, many optical elements (that is, two triangular prisms constituting the cubic prism 2, and the cylindrical lens 4) are necessary for splitting the beams 6 and detecting the focusing error. Therefore, these individual parts and their assembly require high precision, resulting in increased cost of the optical head 1.

In contrast to this, since the second previously proposed optical head 13 requires only a small number of optical elements, its cost can be reduced. However, in the optical head 13, the half mirror 14 produces a coma in addition to the astigmatism.

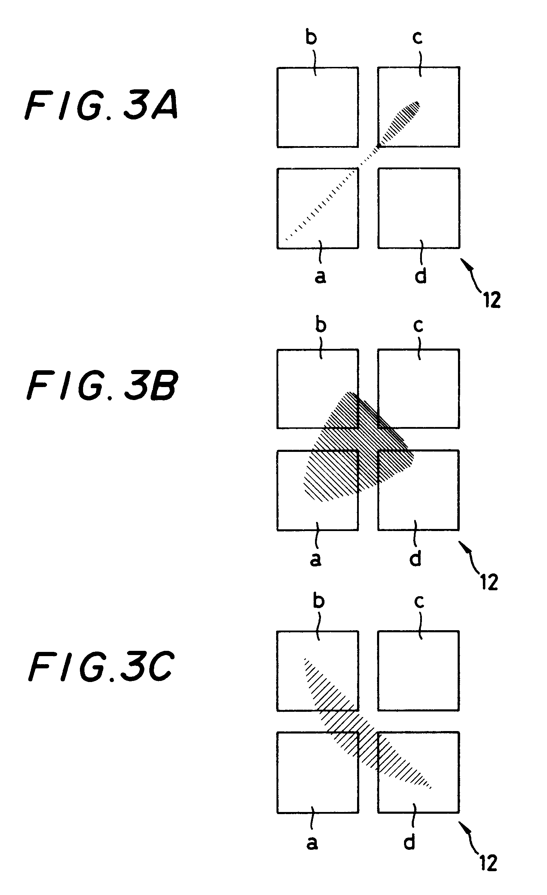

Figures 3A to 3C show shapes of the beams 6 incident on the photodetector 12 of the optical head 13 when lenses having numerical aperture (NA) values of 0.47 and 0.14 are used for the objective lens 8 and the collimator lens 7, respectively, a 3-mm thick optical glass SF11 is used for the parallel-surface plate for the half mirror 14, and the inclination of the half mirror 14 with respect to the optical axis of the beams 6 is set at 45°.

Figures 3A to 3C show cases wherein the optical recording medium 11 is spaced towards the optical head 13 from an in-focus position by 10 micrometres, wherein the recording medium 11 is located at the in-focus position, and wherein the recording medium is spaced from the in-focus position in a direction away from the optical head 13 by 10 micrometres. As can be seen from Figures 3A, 3B, and 3C, a spot formed by the beams 6 is not symmetrical about the centre of photodetecting portions a to d that constitute the photodetector 12, due to the coma generated in the beams 6 incident on the photodetector 12.

When a coma is generated in this manner, various problems are created in the optical head 13. For example, when the spot of the beams 6 is moved on the photodetector 12 for various reasons, an allowable range of deviation of the beam spot is narrowed.

In addition, when only the objective lens 8 is moved during tracking servo control, an allowable range of deviation of the spot of the beams 6, that is, that of the objective lens 8, is narrowed.

When a tracking error signal is obtained from a single spot of the beams 6, dependency of the signal on the recording medium 11 is exhibited to a considerable extent, in addition to the above two problems, and the resultant signal is destabilised.

These problems degrade a design margin of the optical head 13 associated with respective optical elements (for example, not only of the half mirror 14, but also a non-sensitive band of the photodetector 12), an optical system, a tracking error signal detection method, an actuator method, and so on. In addition, the reliability of the optical head 13 also is degraded.

European patent application EP-A-0,047,029 suggests one solution to the correction of coma using a plate which comprises a substrate having a dielectric layer varying in thickness to compensate for differences in path lenghts. The plate is inserted perpendicular to the main optical axis of a system of optical elements in a device for processing optical information.

According to the invention, there is provided an optical head comprising: a collimator lens; an objective lens; a photodetector; a plate-like half mirror arranged to reflect a beam from a light source onto the collimator lens so that the beam becomes incident on an optical recording medium through the collimator lens and the objective lens, and returns through the objective lens, the collimator lens and the half-mirror to be incident on the photodetector, the passage of the returned beam through the half-mirror producing astigmatism; and a plate-like optical element for correcting a coma; the optical head being characterised in that the half mirror and the optical element are arranged in planes that intersect each other so that the angular polarities of the half mirror and the optical element are opposite to each other with respect to an optical axis of the beam and in that the half mirror and the optical element are so disposed that the returned beam, after passing through the half mirror, is incident on the photodetector through the optical element so as to eliminate coma therefrom.

The plate-like half mirror serves as a beam splitter and produces astigmatism, for example for detecting a focusing error, and a coma produced by the plate-like half mirror can be corrected by the optical element for correcting it.

The invention will now be further described, by way of illustrative and non-limiting example, with reference to the accompanying drawings, in which like references designate like elements throughout, and in which:

Figure 1 is a side view of a first previously proposed optical head described above;

Figure 2 is a side view of a second previously proposed optical head described above;

Figures 3A to 3C are plan views showing a beam spot on a photodetector in the second previously proposed optical head;

Figure 4 is a side view of a first optical head embodying the present invention;

Figure 5 is a side view of a half mirror in the first embodiment;

Figure 6 is a side view of an optical element in the first embodiment;

Figures 7A to 7C are plan views of a beam spot on a photodetector in the first embodiment;

Figure 8 is a side view of a second optical head embodying the present invention; and

Figure 9 is a side view of an optical element in the second embodiment.

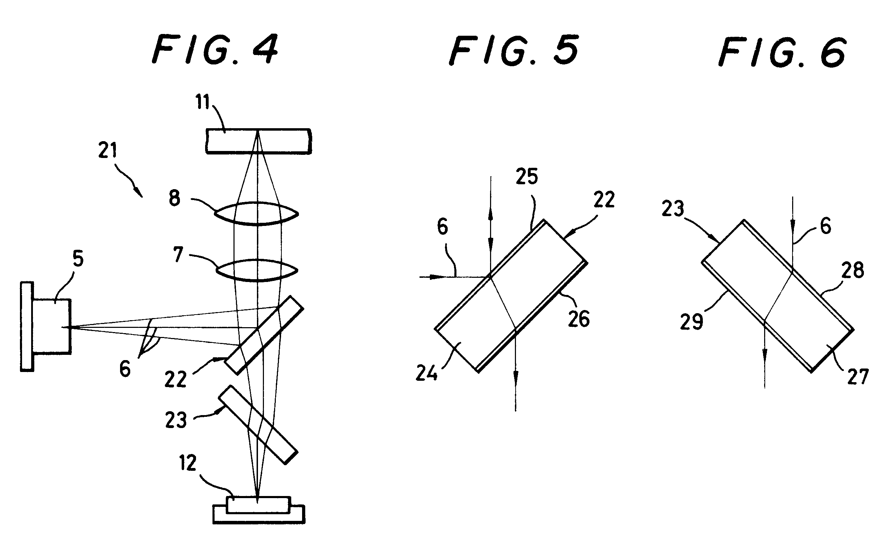

Figure 4 shows a first optical head 21 embodying the present invention that has substantially the same arrangement as that of the first and second previously proposed optical heads 1 and 13, except that a half mirror 22 and an optical element 23 are used in place of the cubic prism 2 and the cylindrical lens 4 (Figure 1) or the half mirror 14 (Figure 2).

As shown in Figure 5, the half mirror 22 is prepared by forming a multilayered deposition film 25 on one surface of a parallel-surface glass plate 24 and by forming a reflection preventive film 26 on the other surface thereof. As shown in Figure 6, the optical element 23 is prepared by forming reflection preventive films 28 and 29 on two surfaces of a parallel-surface glass plate 27 of the same material and thickness as the plate 24. As can be seen from Figure 4, the half mirror 22 and the optical element 23 are inclined to have angular polarities that are opposite to each other with respect to the optical axis of the beams 6. The half mirror 22 and optical element 23 are arranged in planes that intersect each other.

In the optical head 21 of the first embodiment, the beams 6 are emitted from the light source 5 and reflected by the multilayered deposition film 25 of the half mirror 22, pass through a collimator lens 7 and an objective lens 8, and are then incident on an optical recording medium 11.

The beams 6 are then reflected by the recording medium 11 and pass through the objective lens 8, the collimator lens 7, the deposition film 25, the glass plate 24, and the optical element 23, and are then incident on a photodetector 12.

In this case, as can be seen from Figure 4, the optical axis of the beams 6 between the optical element 23 and the photodetector 12 substantially coincides with that of the beams 6 between the recording medium 11 and the half mirror 22 because the beams 6 have passed through the optical element 23.

When the beams 6 pass through the half mirror 22 and the optical element 23, equal amounts of astigmatism and coma are produced therein in accordance with the same principle that produces them in the half mirror 14 used in the previously proposed head 13 shown in Figure 2. As previously described, however, the half mirror 22 and the optical element 23 are inclined to have opposite angular polarities with respect to the optical axis of the beams 6. Therefore, astigmatism produced in the half mirror 22 and astigmatism produced in the optical element 23 are directed in the same direction, but comas produced in the half mirror 22 and the optical element 23 are directed in opposite directions.

As a result, the coma can be eliminated (or at least reduced) from the beams 6 passing through the optical element 23, and the astigmatism therein is doubled when compared with the beams 6 passing through the half mirror 22.

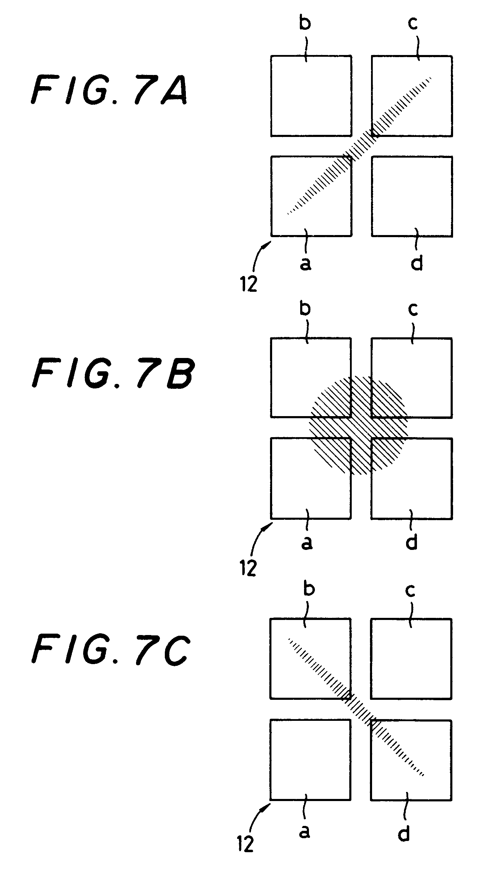

Figures 7A, 7B and 7C show beam spots of the beams 6 incident on the photodetector 12 when, in the optical head 21, the same lenses as in the second conventional optical head 13 are used for the objective lens 8 and the collimator lens 7, 1.5 mm thick optical glass plates SF11 are used for the glass plates 24 and 27, and the half mirror 22 and the optical element 23 are inclined at +45° and -45°, respectively, with respect to the optical axis of the beams 6. Figures 7A, 7B, and 7C correspond to Figures 3A, 3B, and 3C which show the beam spots for the second previously proposed optical head 13.

As can be seen from Figures 7A, 7B, and 7C, the beam spots of the beams 6 are symmetrical about the centre of photodetecting portions a to d that constitute the photodetector 12. This demonstrates that the coma is eliminated from the beams 6 incident on the photodetector 12.

A focusing error signal is obtained by calculating (a + c) - (b + d), where a to d are detection outputs from the photodetecting portions a to d, respectively, and a reproduction signal can be obtained by calculating (a + b + c + d).

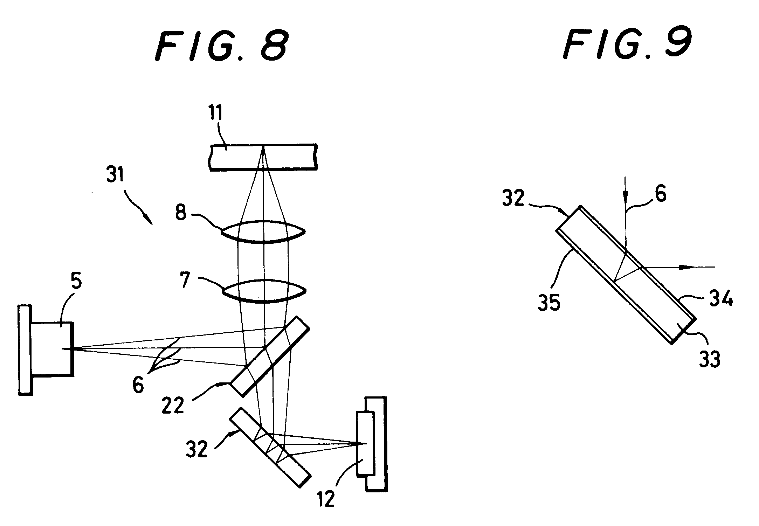

Figure 8 shows a second optical head 31 embodying the present invention that has substantially the same arrangement as that of the optical head 21 of the first embodiment, except that an optical element 32 is used in place of the optical element 23.

The optical element 32 is shown in more detail in Figure 9. As shown in Figure 9, a reflection preventive film 34 is formed on one surface of a parallel-surface glass plate 33 of the same material as the glass plate 24 of the first embodiment and having a thickness half that thereof, and a reflective film 35 is formed on the other surface thereof.

As can be seen from Figure 8, the optical head 31 having the optical element 32 is of reduced thickness in a direction perpendicular to the optical recording medium 11.

Note that the above-described optical heads 21 and 31 are simply particular embodiments of the present invention described by way of example. Materials, thicknesses, inclinations, and the like of the half mirror 22 and the optical elements 23 and 32 are not limited to those of the above-described embodiments, but can be changed within ranges which satisfy conditions for correcting the coma.

In optical heads embodying the present invention as described above, a plate-like half mirror serves as a beam splitter and generates astigmatism for detecting a focusing error. A coma produced by the plate-like half mirror can be corrected by an optical element for correcting it. Therefore, a low-cost, highly reliable optical head can be provided.

**Claims**

1. An optical head (21; 31) comprising:
   a collimator lens (7);
   an objective lens (8);
   a photodetector (12);
   a plate-like half mirror (22) arranged to reflect a beam (6) from a light source (5) onto the collimator lens (7) so that the beam becomes incident on an optical recording medium (11) through the collimator lens (7) and the objective lens (8), and returns through the objective lens (8), the collimator lens (7) and the half-mirror (22) to be incident on the photodetector (12), the passage of the returned beam through the half-mirror (22) producing astigmatism; and
   a plate-like optical element (23; 32) for correcting a coma; the optical head being characterised in that the half mirror (22) and the optical element (23;32) are arranged in planes that intersect each other so that the angular polarities of the half mirror (22) and the optical element (23; 32) are opposite to each other with respect to an optical axis of the beam (6) in that the half mirror (22) and the optical element (23; 32) are so disposed that the returned beam, after passing through the half mirror (22), is incident on the photodetector (12) through the element (23; 32) so as to eliminate coma therefrom.

2. An optical head according to Claim 1, wherein the optical element (23; 32) causes an optical axis of the beam between the optical element and the photodetector (12) to coincide substantially with the optical axis between the recording medium (11) and the half mirror (22).

3. An optical head according to Claim 1 or Claim 2, wherein the optical element (23) has a first surface (28) operative to transmit the beam incident on the optical element therethrough, and a second surface (29) which is parallel to the first surface (28) and is operative to transmit the bean transmitted through the first surface (28).

4. An optical head according to Claim 1, wherein the optical element (32) has a first surface (34) operative to transmit the beam incident on the optical element therethrough, and a second surface (35) which is parallel to the first surface (34) and is operative to reflect the beam transmitted through the first surface (34).

5. An optical head according to Claim 4, wherein a material of the optical element (32) is the same as a material of the half mirror (22), and a thickness of the optical element (32) is half the thickness of the half mirror (22).

6. An optical head according to Claim 1, Claim 2 or Claim 3, wherein the optical element (23) and the half mirror (22) are of the same material and of the same thickness.

## Revendications

1. Tête optique (21 ; 31) comprenant :

    une lentille de collimateur (7) ;

    une lentille d'objectif (8) ;

    un photodétecteur (12) ;

    un demi-miroir en forme de plaque (22) agencé pour réfléchir un faisceau (6) qui provient d'une source de lumière (5) vers la lentille de collimateur (7) de telle sorte que le faisceau arrive en incidence sur un support d'enregistrement optique (11) au travers de la lentille de collimateur (7) et de la lentille d'objectif (8) et retourne au travers de la lentille d'objectif (8), de la lentille de collimateur (7) et du demi-miroir (22) de manière à arriver en incidence sur le photodétecteur (12), le passage du faisceau retourné au travers du demi-miroir (22) produisant de l'astigmatisme ; et

    un élément optique en forme de plaque (23 ; 32) pour corriger un coma ;

    la tête optique étant caractérisée en ce que le demi-miroir (22) et l'élément optique (23 ; 32) sont agencés dans des plans qui se coupent l'un l'autre de telle sorte que les polarités angulaires du demi-miroir (22) et de l'élément optique (23 ; 32) soient opposées l'une à l'autre par rapport à un axe optique du faisceau (6) et en ce que le demi-miroir (22) et l'élément optique (23 ; 32) sont disposés de telle sorte que le faisceau retourné, après être passé au travers du demi-miroir (22), arrive en incidence sur le photodétecteur (12) au travers de l'élément optique (23 ; 32) de manière à en éliminer le coma.

2. Tête optique selon la revendication 1, dans laquelle l'élément optique (23 ; 32) fait qu'un axe optique du faisceau situé entre l'élément optique et le photodétecteur (12) coïncide sensiblement avec l'axe optique situé entre le support d'enregistrement (11) et le demi-miroir (22).

3. Tête optique selon la revendication 1 ou 2, dans laquelle l'élément optique (23) a une première surface (28) qui a pour fonction de transmettre le faisceau qui arrive en incidence sur l'élément optique au travers et une seconde surface (29) qui est parallèle à la première surface (28) et qui a pour fonction de transmettre le faisceau qui est transmis au travers de la première surface (28).

4. Tête optique selon la revendication 1, dans laquelle l'élément optique (32) a une première surface (34) qui a pour fonction de transmettre au travers le faisceau qui arrive en incidence sur l'élément optique et une seconde surface (35) qui est parallèle à la première surface (34) et qui a pour fonction de réfléchir le faisceau qui est transmis au travers de la première surface (34).

5. Tête optique selon la revendication 4, dans laquelle un matériau de l'élément optique (32) est le même qu'un matériau que celui du demi-miroir (22) et une épaisseur de l'élément optique (32) est égale à la moitié de l'épaisseur du demi-miroir (22).

6. Tête optique selon la revendication 1, 2 ou 3, dans laquelle l'élément optique (23) et le demi-miroir (22) sont réalisés à partir du même matériau et ont la même épaisseur.

## Patentansprüche

1. Optischer Kopf (21; 31), der umfaßt:

    - eine Kollimatorlinse (7),

    - eine Objektivlinse (8),

    - einen Photodetektor (12),

    - einen plattenähnlichen Halbspiegel (22), der vorgesehen ist, um einen Strahl (6) aus einer Lichtquelle (5) derart auf die Kollimatorlinse (7) zu reflektieren, daß der Strahl durch die Kollimatorlinse (7) und die Objektivlinse (8) auf ein optisches Aufzeichnungsmedium (11) trifft und durch die Objektivlinse (8), die Kollimatorlinse (7) und den Halbspiegel (22) zurückkehrt, um auf den Photodetektor (12) zu treffen, wobei der Durchgang des zurückkehrenden Strahls durch den Halbspiegel (22) einen Astigmatismus erzeugt, und

    - ein plattenähnliches Element (23; 32) zum Korrigieren eines Linsenfehlers,

    welcher optische Kopf dadurch **gekennzeichnet** ist,

    daß der Halbspiegel (22) und das optische Element (23; 32) in Ebenen angeordnet sind, die einander durchschneiden, so daß die Winkelpolaritäten des Halbspiegels (22) und des optischen Elements (23; 32) in bezug auf eine optische Achse des Strahls (6) einander entgegengesetzt sind, und

    daß der Halbspiegel (22) und das optische Element (23; 32) derart angeordnet sind, daß der zurückkehrende Strahl, nachdem er den Halbspiegel (22) durchlaufen hat, durch das optische Element (23; 32) auf den Photodetektor (12) trifft, um auf diese Weise den Linsenfehler zu eliminieren.

**2.** Optischer Kopf nach Anspruch 1, bei dem das optische Element (23; 32) bewirkt, daß eine optische Achse zwischen dem optischen Element und dem Photodetektor (12) im wesentlichen mit der optischen Achse zwischen den Aufzeichnungsmedium (11) und dem Halbspiegel (22) zusammenfällt.

**3.** Optischer Kopf nach Anspruch 1 oder 2, bei dem das optische Element (23) eine erste Oberfläche (28), die wirksam ist, um den Strahl, der durch diese auf das optische Element trifft, zu übertragen, und eine zweite Oberfläche (29) aufweist, die parallel zu der ersten Oberfläche (28) liegt und wirksam ist, um den Strahl, der durch die erste Oberfläche (28) übertragen ist, zu übertragen.

**4.** Optischer Kopf nach Anspruch 1, bei dem das optische Element (32) eine erste Oberfläche (34), die wirksam ist, um den Strahl, der durch diese auf das optische Element auftrifft, zu übertragen, und eine zweite Oberfläche (35) aufweist, die parallel zu der ersten Oberfläche (34) liegt und wirksam ist, um den Strahl, der durch die erste Oberfläche (34) übertragen ist, zu reflektieren.

**5.** Optischer Kopf nach Anspruch 4, bei dem ein Material des optischen Elements (32) dasselbe wie ein Material des Halbspiegels (22) ist und die Dicke des optischen Elements (32) die Hälfte der Dicke des Halbspiegels (22) beträgt.

**6.** Optischer Kopf nach Anspruch 1, 2 oder 3, bei dem das optische Element (23) und der Halbspiegel (22) aus demselben Material bestehen und gleiche Dicken aufweisen.

# FIG. 1

# FIG. 2

EP 0 198 655 B1

FIG.3A

FIG.3B

FIG.3C

FIG. 6

FIG. 5

FIG. 4

# FIG. 7A

# FIG. 7B

# FIG. 7C

# FIG. 8

# FIG. 9

EP 0 198 655 B1